# FASCICULE DE BREVET EUROPEEN

(11) **EP 3 596 900 B1**
(45) Date de publication et mention de la délivrance du brevet: **22.11.2023**
(21) Numéro de dépôt: 18714315.1
(22) Date de dépôt: 14.03.2018
(51) Int. Cl.: H04L 9/40, H04W 4/12, H04W 12/06, H04W 12/08, H04L 51/212, H04L 51/222

(54) **PROCÉDÉ DE MESSAGERIE NUMÉRIQUE ASSOCIANT UN MESSAGE A UN SUJET MATÉRIEL**
VERFAHREN ZUR DIGITALEN NACHRICHTENÜBERMITTLUNG ZUR VERKNÜPFUNG EINER NACHRICHT MIT EINEM MATERIALSUBJEKT
METHOD FOR DIGITAL MESSAGING ASSOCIATING A MESSAGE WITH A MATERIAL SUBJECT

(30) Priorité: 14.03.2017 FR 1752087; 03.11.2017 FR 1760343
(43) Date de publication de la demande: 22.01.2020
(73) Titulaire: Kerquest, 73310 Chindrieux (FR)
(72) Inventeur: BOUTANT, Yann, 73310 Chindrieux (FR); ROSSET, Gael, 73310 Chindrieux (FR); HAZEBROUCK, Aurélien, 73310 Chambery (FR)
(74) Mandataire: Jacobacci Coralis Harle
(86) Numéro de dépôt international: PCT/FR2018/050616
(87) Numéro de publication internationale: WO 2018/167431

(56) Documents cités:
- EP-A1- 2 573 986
- WO-A1-2016/128196
- US-A1- 2016 248 784

## Description

La présente invention appartient au domaine technique de la messagerie numérique, quel que soit le contenu véhiculé (chiffré ou non) ou encore le schéma expéditeur(s) / destinataire(s) retenu (anonyme(s), 1:1 ou 1:N voire N:1), et pour des messages ayant une disponibilité dans le temps limitée ou non (éphémères ou pérennes). Par messagerie numérique, on entend un système technique (ordinateur, applicatif, réseau, ...) permettant l'acheminement d'un message et de son contenu numérique d'un expéditeur vers un destinataire.

Les systèmes de messagerie numérique actuels permettent à un expéditeur d'envoyer un contenu digital à un ou plusieurs destinataires. Ce contenu transite sous forme numérique de l'expéditeur au(x) destinataire(s) en demeurant sous forme numérique. Le contenu peut parfois avoir une durée de vie limitée à savoir être associé à un système d'effacement intégré ou externe. Le contenu peut être également chiffré nécessitant en général au préalable l'échange de clefs de chiffrements entre l'expéditeur et le destinataire. Le contenu même chiffré est acheminé sans condition particulière de l'expéditeur au destinataire qui peut accéder au contenu dès lors que ce dernier a transité d'un serveur à un autre et atteint sa destination de sauvegarde ou affichage. Tous les systèmes actuels se basent sur un identifiant unique pour définir un expéditeur ou un destinataire. Ainsi un contenu partant d'un expéditeur est toujours récupéré par le destinataire ou tout du moins le propriétaire de l'identifiant de destination. Des initiatives ont été menées dans le domaine pour affiner les conditions de délivrance d'un message, par exemple à condition d'être dans une certaine localisation géographique (en général définie par triangulation GPS, wi-fi, radio ou acoustique ou autre) ou à proximité d'un autre utilisateur appartenant à un groupe d'utilisateurs ; ces applications sont appelées messagerie en fonction de la position en anglais "location-based messaging".

Ainsi, les systèmes proposés ne permettent pas le partage d'un contenu numérique entre un expéditeur et un destinataire strictement conditionné par la mise en oeuvre d'un ou plusieurs sujets matériels. Les procédés existants ne permettent pas l'attachement d'un contenu numérique à un sujet matériel.

L'état de la technique est par exemple connu de par les documents EP 2 573 986 A1 et US 2016/248784 A1. EP 2 573 986 A1 divulgue des systèmes et méthodes augmentant la sécurité de la transmission de messages électroniques. US 2016/248784 A1 traite de l'authentification d'un utilisateur fondée sur une image d'un objet en possession de l'utilisateur.

L'invention vise donc à remédier à ce manque en proposant de conditionner la délivrance d'un message à la condition que le destinataire ait été à un moment ou un autre en relation avec un sujet matériel ou une image de celui-ci. Cette façon de faire permet d'améliorer simplement la confidentialité des messages sans nécessairement avoir recours à la cryptographie. De plus, il est connu en psychologie que l'humain a toujours utilisé sa relation particulière à l'objet matériel pour se souvenir de moments particuliers, pour signifier ou ritualiser certains événements ou encore partager des émotions. Le terme « souvenir » qui caractérise l'objet que l'on ramène de ses voyages ou que l'on offre à ses proches, ou encore qui est attaché à un monument, témoigne de cette connivence entre mémoire personnelle ou collective et les sujets matériels qui nous entourent. Il s'agit donc d'un procédé de messagerie qui est sûr et aussi selon les sujets matériels choisis donne une dimension d'évocation supplémentaire.

Ainsi, la présente invention a d'abord pour but de transmettre un contenu d'un ou plusieurs expéditeur(s) vers un ou plusieurs destinataire(s) en conditionnant sa délivrance à au moins une double authentification à savoir, d'une part, l'authentification du destinataire et d'autre part, l'authentification d'un sujet matériel servant de clé à la délivrance du message et ayant été utilisé pour sa préparation. Il s'agit ainsi d'un procédé de messagerie numérique associée à ce sujet matériel.

Il s'agit de manière imagée de poser des « Post-it^{™} » numériques sur tout type d'objet matériel (physique) et de créer une expérience très intéressante pour le(s) destinataire(s) voire aussi le(s) expéditeur(s). Cette virtualisation du contenu attaché présente aussi l'avantage d'éviter une pollution visuelle réelle ou virtuelle, car paramétrable et entre deux mondes.

L'invention est définie par la revendication 1. Des modes de réalisation préférés sont définis dans les revendications dépendantes.

L'invention présente donc l'avantage de garantir que le ou les destinataire(s) a été en possession ou en présence du sujet matériel avant la délivrance du message, et ainsi de sécuriser simplement l'échange.

Au sens de l'invention, la notion de transmission du message désigne de manière équivalente une transmission mode « push »ou une récupération mode « pull ». De même au sens de l'invention l'expression « détermination d'un authentifiant unitaire » sont synonymes de l'expression « extraction d'un authentifiant unitaire ».

Il doit être noté que chaque authentifiant peut notamment être constitué de l'image correspondante sans toutefois que cela soit nécessairement le cas.

Par message on entend un ensemble numérique comprenant au moins un contenu ainsi qu'une information d'un expéditeur et d'un destinataire voire des méta-données d'autres natures (horodatage, géolocalisation, ...).

Au sens de l'invention il convient d'entendre par « système serveur » un système informatique qui comprend un ou plusieurs serveurs pas nécessairement situés en un même lieu et qui est adapté pour mettre en oeuvre l'invention. Ainsi dans le cadre de ce système serveur, la machine qui assure la transmission des messages n'est pas nécessairement celle qui assure les opérations d'authentification, ni celle qui opère la sauvegarde des données, étant entendu que le système serveur peut aussi comprendre une seule machine qui effectue toutes les opérations allouées dans le cadre de l'invention. Dans le cas d'un système serveur à architecture distribuée, les serveurs mis en oeuvre sont communément appelés des « noeuds ».

Au sens de l'invention, par « référence de calage » il convient d'entendre une image de référence qui peut être de toute nature telle que par exemple : une image d'un sujet de référence de la même famille, type ou catégorie que les sujets matériels mis en oeuvre, une image de points remarquables à proximité de la région d'authentification, une image d'un motif ou de signe présents dans ou à proximité de chaque région d'authentification, sans que cette liste ne soit limitative.

Selon une caractéristique de l'invention le procédé de transmission d'un message comprend une étape d'enregistrement d'au moins un identifiant d'un destinataire associé à au moins authentifiant unitaire d'un sujet matériel.

Selon une caractéristique de l'invention, il est procédé à la détermination, dans chaque image de région d'authentification d'un sujet matériel, de points singuliers et de descripteurs d'une région singulière associée à chaque point singulier, les descripteurs étant associés à chaque point singulier correspondant, et détermination à partir de ladite image d'un authentifiant unitaire dudit sujet matériel.

Par ailleurs, selon l'invention les différentes étapes ne sont pas nécessairement réalisées dans l'ordre séquentiel de leur énumération.

Ainsi par exemple et selon une variante de mise en oeuvre, dans une phase d'enregistrement du message il est procédé au moins aux étapes suivantes :
- enregistrement du contenu du message électronique à transmettre sur le système serveur, le contenu étant associé avec le message à transmettre,
- enregistrement sur le système serveur d'au moins un identifiant d'au moins un destinataire du message, chaque identifiant étant associé avec le message à transmettre,
- enregistrement sur le système serveur d'au moins un identifiant d'au moins un expéditeur du message, chaque identifiant étant associé avec le message à transmettre,
- mise en oeuvre d'au moins un sujet matériel ayant au moins une région d'authentification présentant une microstructure à un grandissement d'observation donné,
- acquisition par un dispositif accessible par l'expéditeur d'au moins une première image d'une région d'authentification,
- détermination à partir de la première image d'au moins un premier authentifiant unitaire d'un sujet matériel,
- enregistrement d'un authentifiant unitaire du sujet matériel sur le système serveur en association avec le message à transmettre.

Dans une phase de récupération du message par chaque destinataire, il est procédé au moins aux étapes suivantes:
- acquisition par un dispositif accessible par le destinataire d'au moins une deuxième image d'une région d'authentification d'un sujet matériel,
- détermination dans la deuxième image de points singuliers et de descripteurs d'une région singulière associée à chaque point singulier, les descripteurs étant associés à chaque point singulier correspondant,
- extraction à partir de la deuxième image d'un deuxième authentifiant unitaire candidat du sujet matériel,
- mise en oeuvre d'un recalage au moyen des points singuliers et de leurs descripteurs associés puis comparaison des première et deuxième image et/ou de leurs authentifiants unitaires respectifs,
- mise en oeuvre d'une phase d'authentification de l'identifiant du destinataire d'une part et de l'authentifiant unitaire candidat du sujet matériel avec ceux associés au message à délivrer et stockés dans le système serveur,
- en cas de similarité suffisante entre les première et deuxième images ou leurs authentifiants unitaires respectifs et concordance entre l'identifiant du destinataire enregistré dans le système serveur et l'identifiant du destinataire candidat, transmission au destinataire du message associé à son identifiant et au sujet matériel générateur.

L'étape de détermination dans la première image de points singuliers et de descripteurs peut alors intervenir soit dans la phase d'enregistrement soit dans la phase de récupération ou encore en dehors de ces phases.

Au sens de l'invention la micro-texture de la région d'authentification est intrinsèque et aléatoire en ce qu'elle résulte de la nature même de la région d'authentification du sujet matériel. Dans une forme de mise en oeuvre préférée de l'invention, chaque sujet matériel utilisé appartient aux familles de sujets comprenant au moins une région d'authentification comprenant une structure intrinsèque essentiellement aléatoire non aisément reproductible c'est-à-dire dont la reproduction est difficile voire impossible en ce qu'elle résulte notamment d'un processus non prédictible à l'échelle d'observation. Une telle région d'authentification à structure de milieu continu intrinsèque essentiellement aléatoire non aisément reproductible correspond aux fonctions physiques non clonales en anglais « Physical Unclonable Functions » (PUFs) telles que notamment définies par la publication en anglais Encyclopedia of Cryptography and Security édition 01/2011 pages 929 à 934 dans l'article de Jorge Guajardo. De manière préférée, la région d'authentification d'un sujet matériel conforme à l'invention correspond à une fonction physique non clonale intrinsèque désignée en anglais par «Intrinsic PUFs » dans l'article précité. Les inventeurs mettent à profit le fait que la nature aléatoire de la microstructure de la région d'authentification est inhérente ou intrinsèque à la nature même du sujet parce que résultant de son mode d'élaboration, de développement ou de croissance de sorte qu'il n'est pas nécessaire de rajouter à la région d'authentification une structure particulière, notamment une impression, ou encore une gravure.

Cependant, si la microstructure proprement dite d'un sujet matériel peut être utilisée pour déterminer un authentifiant unitaire, il peut également être utilisé, mais aussi par exemple les marques laissées par l'interaction d'une gravure, d'une impression, d'un embossage, d'un étampage avec le sujet matériel dans ce qu'elle a d'aléatoire (par exemple : du papier avec impression jet d'encre, la forme des gouttes déposées sur le papier pouvant suffire).

Selon une caractéristique de l'invention, dans la phase d'enregistrement du message il est enregistré sur le système serveur au moins un identifiant de chaque destinataire dans le message à transmettre et que dans la phase de récupération il est mis en oeuvre un identifiant du destinataire conjointement à l'authentifiant du sujet matériel candidat et le message n'est alors transmis au destinataire qu'uniquement en cas d'authentification positive de ces derniers par le système serveur ou tout autre dispositif. Au sens de l'invention un identifiant est une donnée ou un ensemble de données qui permettent d'identifier un destinataire ou un expéditeur tout en offrant un degré relativement élevé de certitude que l'identité de celui-ci n'a pas été usurpée. Ainsi un identifiant peut être, par exemple, une donnée biométrique ou encore la combinaison d'un nom d'utilisateur et d'un mot de passe connu de la seule personne titulaire de l'identifiant.

L'authentifiant unitaire peut être la ou les image(s) acquise(s) elle(s)-même(s), une image extraite ou dérivée de celle(s)-ci, ou tout ensemble de données numériques déduites à partir de la ou des image(s) acquise(s) et caractérisant cette dernière ou ces dernière(s). Par exemple, des descripteurs invariants locaux des caractéristiques locales calculées à partir de la ou des image(s) acquise(s) qui contient les informations spatiales structurelles ou micro-structurelles de la région d'authentification.

Selon une autre caractéristique de l'invention, préalablement à la phase de récupération du message, il est transmis à chaque destinataire une information relative au sujet matériel dont l'image de la zone d'authentification devra être utilisée pour la récupération du message. Au sens de l'invention, l'information relative au sujet matériel peut être une information de localisation, de position, ou encore une information telle que des instructions permettant au destinataire de savoir ce qu'il doit faire pour se trouver en présence du sujet matériel.

Selon une variante de cette caractéristique l'information relative au sujet matériel comprend au moins une information de géolocalisation du sujet matériel.

Selon une autre caractéristique de l'invention, préalablement à la phase de récupération du message, le sujet matériel est remis à chaque destinataire.

Selon une autre caractéristique de l'invention, le destinataire est notifié par un dispositif de la disponibilité d'un message à son attention, ou par tout autre moyen. Un tel dispositif peut alors soit recevoir, en mode dit « push », un message l'informant de la disponibilité d'un message à venir relever soit aller vérifier régulièrement, dans un mode dit « pull » l'éventuelle disponibilité d'un message à relever. La notification peut aussi être un affichage contextuel dans le cadre d'une visualisation en réalité augmentée.

Selon encore une autre caractéristique de l'invention, dans la phase de récupération du message, le message est visualisé par chaque destinataire en association avec une image du sujet matériel et/ou de son environnement. Il est alors possible de faire appel pour cela à des techniques de réalité augmentée de tout type.

Selon une caractéristique de l'invention, dans la phase d'enregistrement, la détermination d'un authentifiant unitaire d'un sujet matériel est effectuée au moyen d'un algorithme donné et en ce que pendant la phase de récupération il est mis en oeuvre un dispositif de communication mobile qui comprend des moyens d'acquisition d'image et des moyens de calcul et qui est adapté pour mettre en oeuvre le même algorithme pour la détermination du deuxième authentifiant unitaire, l'authentifiant unitaire candidat d'un sujet matériel.

Selon une caractéristique de l'invention, dans la phase d'enregistrement, l'authentifiant unitaire d'un sujet matériel est une image d'authentification et pendant la phase de récupération il est mis en oeuvre un dispositif de communication mobile qui comprend des moyens d'acquisition d'image et des moyens de calcul et qui est adapté pour mettre en oeuvre un algorithme donné pour le recalage voire la comparaison de l'image d'authentification et de l'image de vérification.

Selon une caractéristique de l'invention, dans la phase d'enregistrement, l'authentifiant unitaire d'un sujet matériel est une image d'authentification et pendant la phase de récupération il est mis en oeuvre un dispositif de communication mobile qui comprend des moyens d'acquisition d'image et des moyens de calcul et qui est adapté pour transmettre à un système serveur l'image de vérification, de manière sécurisée ou non, sans réaliser localement les calculs de recalage ou comparaison.

Selon une caractéristique de l'invention, les phases de recalage, de détermination d'un authentifiant unitaire et de comparaison sont effectuées pour partie dans un dispositif de communication mobile qui comprend des moyens d'acquisition d'image et des moyens de calcul et pour partie dans au moins un système serveur.

Bien entendu, les diverses caractéristiques et variantes de l'invention peuvent être associées les unes avec les autres selon diverses combinaisons dans la mesures où elles ne sont pas exclusives les unes des autres.

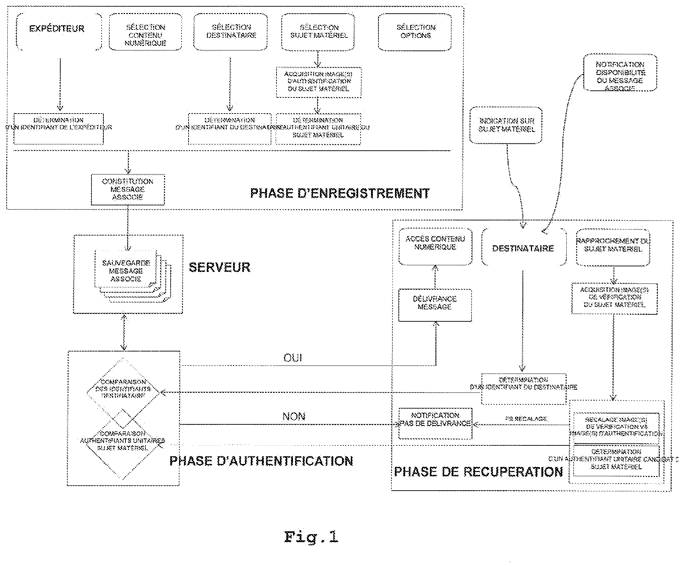

Il apparaît que l'invention propose notamment un système de messagerie qui permet à un expéditeur (désigné par un identifiant) d'envoyer un contenu numérique à un ou plusieurs destinataires (désigné(s) par un ou des identifiants), le contenu étant associé à au moins un sujet matériel (désigné chacun par au moins un authentifiant unitaire). Un schéma de principe d'un exemple d'un tel système de messagerie est illustré à la figure 1.

Ainsi pour envoyer un message, l'expéditeur met en oeuvre la création d'au moins un authentifiant unitaire du sujet matériel, discriminant et caractéristique intrinsèque d'un sujet matériel, qui sert d'ancrage au contenu à transmettre. Pour pouvoir accéder au contenu du message, le destinataire doit fournir au serveur son identifiant comme pour tout système de messagerie actuel mais aussi un authentifiant unitaire du même sujet matériel ayant servi au moment de la création du message par l'expéditeur. Un authentifiant unitaire du sujet matériel peut être une ou des image(s) de la région d'authentification du sujet matériel ou toutes métriques extraites desdites image(s) et caractérisant en partie la microstructure du sujet matériel. Au sens de l'invention le contenu du message peut être de toute nature comme par exemple des données et/ou une application ou encore un lien de démarrage de cession, un lien hypertexte sans que celle liste ne soit exhaustive ou limitative.

Au sens de l'invention, on entend par image, d'abord une image optique dont la chaîne d'acquisition comprend une partie optique et qui résulte de la sollicitation d'une région au moins d'un sujet matériel (dite région d'authentification) par un rayonnement lumineux, de préférence mais non nécessairement visible par le système visuel humain. L'éclairage du sujet matériel peut être adapté au comportement optique de la région d'authentification en réflexion et/ou en transmission. Il peut également être utilisé l'éclairage ambiant lorsqu'il est adapté. Le terme image doit également être entendu au sens large et non pas limité au seul sens d'une image optique résultant notamment de la sollicitation d'une région d'authentification par un rayonnement lumineux. Ainsi, les images d'authentification et de vérification peuvent être obtenues par tout type de sollicitation de la région d'authentification en association avec une chaîne d'acquisition adaptée (passage de l'analogique au numérique), étant entendu que le même type ou la même nature de sollicitation est mis en oeuvre pour l'acquisition des images d'authentification et de vérification. Parmi les types de sollicitations ou les modes d'acquisition envisageables il est possible notamment de citer: les ultrasons, les rayonnements X, la tomographie X ou laser, la radiographie X, la résonance magnétique, sans que cette liste ne soit limitative ou exhaustive.

Selon un exemple de mise en oeuvre de l'invention, un expéditeur sélectionne, dans une phase d'enregistrement, un contenu numérique, un destinataire et au moins un sujet matériel. Par le biais d'un dispositif électronique connecté à un réseau informatique, cet expéditeur va initier la mise en oeuvre des étapes suivantes :
- détermination de l'identifiant de l'expéditeur, détermination l'identifiant du destinataire et détermination d'un authentifiant unitaire du sujet matériel au minimum;
- constitution du message associé : l'ensemble des données numériques précédemment citées (identifiant expéditeur, identifiant destinataire, contenu numérique et authentifiant unitaire du sujet matériel) va être assemblé pour constituer un message associé, ensemble de données numériques multi-unitairement-indexées et prêt à être manipulé dans toute infrastructure de télécommunication existante et selon tous les types de protocole connus ou adaptés (protocoles e-mails, protocoles de messageries instantanées, protocoles de messageries (WAP, SMS, MMS,...), ...).

Le message associé est alors pris en charge par l'infrastructure de télécommunication sélectionnée et va être au moins sauvegardé dans un conteneur numérique (système serveur local ou distant) de manière à pouvoir être mis en oeuvre (délivré) ultérieurement.

Le destinataire est ensuite notifié directement ou indirectement par le système serveur ou tout autre dispositif de la mise à disposition du message associé et reçoit une indication sur le sujet matériel (et/ou la région d'authentification du sujet matériel) ayant été associé au message initialement afin qu'il puisse se rapprocher du sujet matériel et mettre en oeuvre la partie récupération du procédé, objet de la présente invention.

Il est alors réalisé une étape de détermination d'un identifiant du destinataire et une phase de détermination d'un authentifiant unitaire candidat du sujet matériel (authentifiant unitaire de vérification). Pour être autoriser à accéder au contenu du message associé, il doit être utilisé un même sujet matériel que celui mis en oeuvre lors de la génération du message, voire sensiblement la même région d'authentification du même sujet matériel que celle mise en oeuvre initialement par l'expéditeur. Cette phase de détermination d'un authentifiant unitaire candidat comprend les étapes suivantes : acquisition d'au moins une image de vérification (image acquise à partir d'une région d'authentification du sujet matériel candidat) / réalisation d'un recalage relatif ou absolu des images d'authentification et de vérification et détermination d'un authentifiant unitaire du sujet matériel candidat / dans le cas où le recalage n'est pas possible, conclure à l'échec prématuré de l'authentification des images des sujets matériels.

Il est ensuite réalisé de manière locale (dans le dispositif du ou proche du destinataire) ou distante (dans au moins un système serveur), ou en partie locale et en partie distante, une phase d'authentification. Cette opération est menée par un ou plusieurs dispositifs électroniques dotés au moins d'un processeur et d'une mémoire, voire de moyens de télécommunication, permettant réaliser les séquences de calculs numériques et de comparaisons entre l'identifiant sauvegardé du destinataire et l'identifiant candidat du destinataire d'une part, et, d'autre part, les authentifiants unitaires du sujet matériel candidat et du sujet matériel sauvegardé lors de la phase d'enregistrement du message. Cette étape va nécessiter l'interaction avec au moins un système serveur.

En cas d'invalidation de la phase d'authentification (NON), le procédé prend fin par une notification de l'échec de la délivrance au moins au destinataire et peut le cas échéant proposer au destinataire de reprendre au début la phase de récupération.

En cas de validation de la phase d'authentification (OUI), l'étape suivante est la délivrance du message associé avec la possibilité pour le destinataire d'accéder au contenu numérique tel que voulu par l'expéditeur.

Au sens de l'invention et selon une mise en oeuvre la plus simple, les identifiants de l'expéditeur et du destinataire sont constitués respectivement par des noms d'utilisateurs et mots de passe pré-existants, l'authentifiant unitaire du sujet matériel est quant à lui réduit à une image acquise par le biais d'un dispositif électronique communicant équipé d'au moins un capteur (éventuellement d'une source de sollicitation propre) contenant au moins des caractéristiques physiques intrinsèques du sujet matériel

Au sens de l'invention, l'expéditeur peut être toute entité (personne ou automate ou robot ou objet communicant) désigné comme étant l'émetteur du contenu d'un message. Il peut être anonyme sans que cela soit nécessaire.

Au sens de l'invention, le destinataire peut être toute entité (personne ou automate ou robot ou objet communicant) désigné comme récepteur du contenu d'un message. Le destinataire peut être unique, multiple et restreint c'est-à-dire réservé à un groupe prédéfini, ou non restreint c'est-à-dire accessible à tous tout en ayant un accès contrôlé par la nécessité de mise en oeuvre du sujet matériel ou la possibilité de recalculer l'authentifiant unitaire du sujet matériel authentique. Un authentifiant unitaire du sujet matériel peut être une image de la zone d'authentification du sujet matériel ou toute métrique extraite de ladite image et caractérisant en partie la microstructure du sujet matériel.

Au sens de l'invention, le sujet matériel est de préférence indépendant de l'expéditeur et du destinataire. L'invention s'appuie en partie sur les propriétés d'unicité, de non reproductibilité et d'imprédictibilité du sujet matériel. Selon l'invention, le sujet matériel n'est pas un animal vivant et de préférence est inerte ou mort par opposition à vivant c'est-à-dire que le sujet matériel n'est pas susceptible de se modifier spontanément dans le cadre d'un processus de croissance ou de régénération d'un organisme vivant. L'invention utilise ou met en oeuvre la microstructure ou structure du sujet matériel, traduite en microtexture ou texture dans toute image acquise depuis ledit sujet matériel. Le sujet matériel peut être un objet physique (matériau, produit,...) ou une scène naturelle (paysage,...) dont la nature et la complexité sont compatibles avec les caractéristiques nécessaires à la mise en oeuvre de l'invention.

Au sens de l'invention, il faut entendre par région d'authentification, une partie d'un sujet matériel dont l'image extraite contient des informations spatiales, sur la structure ou microstructure du sujet matériel (par exemple des inhomogénéités naturellement présentes). Dans le cadre de l'invention à un grandissement d'observation donné, le terme texture ou micro-texture se rapporte à ce qui est visible ou observable sur une image tandis que le terme structure ou ou microstructure se rapporte au sujet matériel en lui-même. Ainsi, à un grandissement d'observation donné, une texture ou micro-texture correspond à une image de la structure ou microstructure de la région d'authentification d'un sujet matériel.

Une région d'authentification est donc un espace physique sur ou dans le sujet matériel qui a permis de générer lors de la phase d'enregistrement un authentifiant unitaire à partir du sujet matériel et qui doit être réutilisée au moins lors de la phase de récupération pour permettre la récupération d'un message. Une région d'authentification n'a pas nécessité d'être marquée physiquement au sens de l'invention. La position de la région d'authentification sur le sujet matériel à authentifier peut être enregistrée. Un tel enregistrement permet, bien qu'il ne soit pas absolument nécessaire, de faciliter la phase de vérification. Un sujet matériel utilisé dans la mise en oeuvre du procédé objet de la présente invention sans le moindre marquage ne peut être alors connu ni détecté par quiconque n'est pas expéditeur ou destinataire du message associé. Par exemple, on peut utiliser pour guider le destinataire lors de la phase de récupération, des données télémétriques, de localisation (GPS ou autres), gyroscopiques (accéléromètre(s) embarqué(s) dans un terminal mobile par exemple), afin qu'il soit dans des conditions les plus proches possibles de celles utilisées par l'expéditeur initialement.

Bien entendu, il peut également être mise en oeuvre un sujet matériel sur lequel une zone de lecture utilisée aura été repérée voire marquée. Ainsi, selon encore une autre caractéristique de l'invention, la position de la région d'authentification sur le sujet à authentifier est repérée sur le sujet à authentifier. Ce repérage peut être explicite en ce qu'il y a une ou plusieurs marques indiquant la région d'authentification ou implicite en ce que la région d'authentification est située dans ou à proximité d'une région caractéristique du sujet par exemple à proximité d'un motif décoratif.

Au moins une image d'authentification (première image acquise à partir d'une région d'authentification d'un sujet matériel) est mise en oeuvre lors de la constitution du message par le ou les expéditeur(s) et au moins une image de vérification (deuxième image acquise à partir d'une région d'authentification d'un sujet matériel candidat) doit être mise en oeuvre par le ou les destinataire(s) pour permettre l'accès au contenu du message dans le seul cas où le sujet matériel candidat est un sujet matériel ayant été utilisé lors de la constitution du message associé. La constitution du message peut également intervenir lors de la phase dite d'enregistrement ou encore la phase dite d'authentification. De manière préférée, l'image d'authentification du sujet matériel et/ou le sujet matériel est en possession ou présence de l'expéditeur qui peut aussi être qualifié d'auteur ou créateur avant que le destinataire ne soit en possession ou présence du sujet matériel. Autrement dit, le sujet matériel est connu de l'expéditeur avant d'être connu du destinataire. Ainsi, selon une forme de mise en oeuvre de l'invention, l'expéditeur prépare le message associé au sujet matériel qu'il aura choisi sans avoir connaissance au préalable du destinataire, autrement dit, sans identification préalable du destinataire.

L'invention en effectuant une analyse de similarité entre une première image, qui est appelée image d'authentification, et une deuxième image, qui est appelée image de vérification ou image candidate, présente l'avantage de permettre la délivrance du contenu du message au destinataire alors que les conditions de prise d'image du sujet matériel pour l'image de de vérification ou deuxième image ne sont jamais identiques à celles réunies lors de la réalisation par l'expéditeur de la première image ou image d'authentification. En effet entre les acquisitions des première et deuxième images, le sujet matériel a pu être légèrement dégradé, les conditions d'illuminations ou autre sollicitation ne sont pas les mêmes, le capteur utilisé est en règle général différent (ex : optique et résolution) et les positions relatives du capteur, de la source de sollicitation et de l'objet matériel sont aussi différentes.

Afin de répondre aux difficultés engendrées par les différences de condition d'acquisition des première et deuxième image, l'invention propose dans une mise en oeuvre préférée de procéder à un recalage des deux images ou un recalage de l'une des images par rapport à l'autre. Par recalage, on entend la mise en correspondance d'images (mono ou multi-sources), c'est à dire l'identification de différents attributs soumis à une certaine relation. Cette mise en correspondance s'appuie en général sur la recherche d'une possible transformation géométrique permettant le passage d'une image à l'autre, directement ou relativement à au moins une image de référence. Pour ce faire les principales méthodes connues sont la recherche de primitives géométriques communes (appariées) entre les deux images pour calcul de la transformation ou encore recherche de similarité (corrélation ou autre) entre caractéristiques locales d'intensité entre les deux images pour le calcul de la transformation. La transformation recherchée au sens de l'invention peut être linéaire (transformation dite rigide, par exemple homographie) mais aussi non-linéaire (transformation déformable). Ainsi il est possible d'appliquer le procédé objet de la présente invention à des sujets matériels solides mais aussi des sujets matériels élastiques, en tout ou partie, voire présentant des caractéristiques hybrides.

Au sens de l'invention le recalage des images de vérification (deuxième image) et d'authentification (première image) doit s'entendre d'image(s) à image(s), de portion(s) d'image(s) à portion(s) d'image(s), voire encore d'un ensemble de points singuliers et de leurs caractérisations locales vers un autre ensemble de points singuliers et de leurs caractérisations locales, de couples (points singuliers, descripteurs locaux) à couples (points singuliers, descripteurs locaux), ou de toute information dérivée permettant une mise en correspondance et le cas échéant un calcul de transformation géométrique. Dans l'exemple précédent, les couples mentionnés sont considérés comme des authentifiants unitaires du sujet matériel.

Le recalage mis en oeuvre est un préalable à la comparaison proprement dite des images ou des authentifiants unitaires associés aux dites images. Pour ce faire, de nombreuses métriques sont envisageables sans dénaturer la présente invention. On citera le calcul de signatures extraites des première et deuxième images selon un même algorithme et le calcul consécutif d'une distance entre ces métriques et l'utilisation d'un seuil d'acceptation, ou encore la comparaison directe de points singuliers en correspondance dans la première image et la deuxième image avec un seuil d'acceptation quant au nombre d'appariements de points singuliers par exemple. Ces points singuliers peuvent avantageusement être des invariants ou quasi-invariants aux transformations linéaires ou affines (rotations, homothéties, translations et facteurs d'échelle).

De la même manière une distance, l'inverse d'une distance ou d'une divergence appropriée peut être utilisé comme indicateur de similarité, et peut être appliqué aussi pour l'appariement de points d'intérêt caractéristiques détectés et quantifiés au moyen de descripteurs locaux entre pavés d'images, par exemple issus de filtres de Law ou de motifs binaires locaux (LBP) ou de gradient de niveau(x) de signal (par exemple de type SURF, SIFT, KAZE, ORB, BRISK,..). Pour ces derniers traitements en particulier il peut être pertinent de passer par une étape de filtrage préalable de manière à gommer les différences d'illumination locale et/ou une égalisation d'histogramme et ainsi révéler l'intérêt de la microstructure / microtexture de l'image au sens de l'invention.

Dans le cadre de l'invention, des méthodes calculatoires utilisant les réseaux de neurones artificiels, qui implicitement recalent, calculent des poids de similarité, extraient des caractéristiques et/ou classifient, peuvent aussi être utilisés. Ainsi, dans un mode de mise en oeuvre de l'invention un recalage dense c'est-à-dire s'appuyant sur un grand nombre de points ou de zones de correspondance, permet la reconnaissance et ainsi également l'authentification du sujet matériel.

Un authentifiant unitaire d'un sujet matériel peut être une information numérique déduite des propriétés d'unicité, d'imprédictibilité voire de non reproductibilité dudit sujet matériel et qui assure que toute génération d'un authentifiant unitaire candidat à partir du même sujet matériel se situera à une distance inférieure à un certain seuil alors que toute génération d'un authentifiant unitaire issu d'un autre sujet matériel se situera à une distance supérieure à ce même seuil, ce seuil étant choisi de manière à réduire au maximum les risques de collisions (acceptation d'un faux pour un vrai et rejet d'un vrai pour un faux). Il est alors par exemple mis en oeuvre une comparaison statistique avec indicateur de similarité et seuil d'acceptation.

Un authentifiant unitaire d'un sujet matériel peut-être un ensemble (multidimensionnel) dont la frontière est déterminée de manière à ce que tout authentifiant unitaire candidat issu du même sujet matériel (même région d'authentification) est un élément de cet ensemble au sens d'un critère d'appartenance, et que tout authentifiant unitaire candidat issu d'un autre sujet matériel ne soit pas élément de cet ensemble, en réduisant au maximum les risques de collisions (acceptation d'un faux pour un vrai et rejet d'un vrai pour un faux). L'univers d'authentifiants unitaires ainsi constitué peut être paramétrable a priori ou modifiable a posteriori.

Dans le cadre de l'invention, il est pris en compte du fait que tout sujet matériel est susceptible d'être soumis dans le temps à des modifications volontaires ou involontaires et que toute capture acquisition d'une image du sujet matériel induit elle aussi de la variabilité. De manière avantageuse, le procédé selon l'invention est résistant aux altérations partielles du sujet à authentifier et robuste en ce qui concerne les variations des conditions d'acquisition des images d'authentification et de vérification. Le procédé objet de la présente invention est résistant à des altérations matérielles du sujet ou des modifications des conditions de d'acquisition de faible amplitude, cette notion de faible amplitude étant conditionnée par le choix de l'indice de similitude et du seuil d'acceptation ou encore du critère d'appartenance et de la frontière. Cependant, le procédé selon l'invention ne peut être mis en oeuvre en cas de modifications ou d'altérations trop importantes à l'échelle de la région d'authentification ou de conditions de captures trop dissemblables pour les première et deuxième images.

Le choix d'un sujet matériel même est un élément déterminant de la solidité de l'ensemble du procédé. Il peut être intéressant dans certaines applications d'utiliser des sujets matériels se dégradant / évoluant plus ou moins rapidement dans le temps de manière à limiter naturellement la durée de disponibilité des messages à la durée de vie ou de récupération d'un authentifiant unitaire du sujet matériel correct au sens de l'invention. On peut même songer à caractériser l'indice de dégradation du sujet matériel pour estimer son âge en tant qu'élément de datation ou de détermination de « l'âge » du message.

Il doit être remarqué que l'invention apporte une certaine fiabilité et sécurité des messages et de leur distribution grâce à leur association à des sujets matériels, même si elle ne vise pas spécifiquement à être un procédé sécurisé de transmission de message. Pour renforcer la sécurité du procédé selon l'invention il est possible de mettre en oeuvre à tout mécanisme de sécurisation des données et des matériels / dispositifs électroniques par exemple chiffrement des données, signatures électroniques, token de sécurité. De même, la sécurisation peut être assurée par un système de registre distribué et sécurisé, de type « blockchain », de toutes les transactions de messagerie effectuées depuis la première mise en oeuvre ou démarrage d'un système de messagerie selon l'invention. L'élément sécurisé dans le cadre d'un tel mécanisme pourra alors être le message échangé ou le ou les sujets matériels mis en oeuvre ou leur image ou encore la combinaison du message et du ou des sujets matériels associés.

Par ailleurs, il est possible que le contenu du message tel que mis en oeuvre dans le présent procédé par un expéditeur puisse continuer d'évoluer dans sa phase de stockage et ce jusqu'à sa délivrance au destinataire. Ainsi l'expéditeur peut décider de l'information précise et définitive constitutive du contenu du message associé, mais encore peut choisir des règles d'évolution et une information de départ (contenu initial) qui évoluera jusqu'à sa délivrance au moins. Par exemple un contenu en tout ou partie de type flux RSS actualisé durant la sauvegarde (la sauvegarde dans le serveur de données est dynamique en l'espèce); ou encore un contenu en tout ou partie dépendant du jour de délivrance est parfaitement possible (jour qui n'est pas connu de l'expéditeur au moment où il ancre son message).

Dans une variante du procédé selon l'invention, il est offert la possibilité pour le destinataire de reposter un message en tout ou partie différent du message associé et de le renvoyer à l'expéditeur initial.

De même, la notification au(x) destinataire(s) peut se faire en précisant un numéro unique d'identification du message (par exemple construit à partir d'une valeur aléatoire couplée à une valeur incrémentale) servant d'index en retour et permettant un contrôle 1:1 plus rapide, lors des(s) phase(s) de récupération et d'authentification .

Selon une variante de mise en oeuvre, un expéditeur peut envoyer à un destinataire une indication sur le sujet matériel par tout canal, y compris même si possiblement moins pertinent via le système serveur (de manière chiffrée ou pas en même temps que la notification). Un mode de communication de l'indication quant au sujet matériel peut-être par exemple en SMS ou MMS ou téléphone, quand le message associé est transmis par e-mail par exemple.

L'invention peut être mise en oeuvre avec des dispositifs électroniques adaptés comprenant au moins un capteur (caméra, capteur CCD, CMOS, ultrasons,...), une mémoire et un processeur, voire le cas échéant une source de sollicitation (lumineuse ou autre). Parmi les dispositifs électroniques adaptés à une mise en oeuvre de l'invention il est possible de citer : ordinateur, tablette, smartphone, masque de réalité augmentée, lunettes de réalité augmentée.

Il doit être remarqué qu'il est possible de choisir comme sujet matériel un produit manufacturé (industriel ou artisanal), une oeuvre d'art, un élément ou une scène naturelle. Dans le cas d'une boîte de parfum par exemple, et au moment de l'achat dans la boutique on peut mettre en oeuvre le procédé en tant qu'expéditeur et envoyer à un destinataire ladite boîte de parfum. Le destinataire lorsqu'il est livré est donc en possession du sujet matériel, le rapprochement est donc réalisé, a été notifié par tout moyen par l'expéditeur qu'il avait un message à son attention qui l'attendait (éventuellement avec un numéro unique d'identification du message) et il peut alors mettre en oeuvre le procédé et recevoir le contenu numérique prévu par l'expéditeur.

Il est également possible de choisir comme sujet matériel un environnement urbain, une pierre d'un monument fameux (la cathédrale Notre-Dame à Paris, le Colisée de Rome, ...) et mettre en oeuvre le procédé objet de l'invention.

Parmi les applications envisageables pour l'invention, il est possible de citer des interactions et des échanges entre un fabriquant / distributeur de produits et les consommateurs, des jeux de piste dont les indices et/ou instructions sont délivrés au moyen du système de messagerie selon l'invention. Une autre application possible est l'enregistrement de produits en vue de la garantie ou l'accès ou délivrance à un mode d'emploi.

Bien entendu, diverses autres variantes du procédé ou autres mises en oeuvre de l'invention peuvent être envisagées dans le cadre des revendications annexées.

## Revendications

1. Procédé de transmission d'un message électronique par un expéditeur à un destinataire comprenant les étapes suivantes :
- initialement choix par l'expéditeur d'un sujet matériel, indépendant de l'expéditeur et du destinataire, ayant une région d'authentification présentant une microstructure à un grandissement d'observation donné, puis acquisition ou mise en oeuvre par l'expéditeur d'une première image de la région d'authentification,
- enregistrement par l'expéditeur du message électronique à transmettre sur un système serveur,
- détermination à partir de la première image d'un premier authentifiant unitaire du sujet matériel et enregistrement sur le système serveur du premier authentifiant unitaire, le premier authentifiant unitaire étant associé au message à transmettre,
- enregistrement sur le système serveur d'un identifiant du destinataire du message, l'identifiant étant associé avec le message à transmettre,
- notification au destinataire de l'existence du message,
- transmission au destinataire d'une information relative au sujet matériel dont l'image de la région d'authentification devra être utilisée par le destinataire pour la récupération du message,
- acquisition par le destinataire d'une deuxième image de la région d'authentification du sujet matériel, la deuxième image étant acquise avec une qualité sensiblement équivalente à celle de la première image de manière que la première et la deuxième image contiennent un niveau sensiblement équivalent d'information relative à la région d'authentification ,
- détermination à partir de la deuxième image d'un deuxième authentifiant unitaire du sujet matériel,
- transmission au système serveur d'un identifiant du destinataire ayant procédé à l'acquisition de la deuxième image à l'origine du deuxième authentifiant unitaire, l'identifiant dudit destinataire étant associé au deuxième authentifiant unitaire,
- comparaison des authentifiants unitaires,
- en cas de similarité entre les premier et deuxième authentifiants unitaires et concordance entre l'identifiant du destinataire enregistré dans le serveur et l'identifiant du destinataire transmis, transmission au destinataire du message, le message étant associé à l'identifiant du destinataire enregistré dans le serveur et au premier authentifiant unitaire.

2. Procédé selon la revendication 1, **caractérisé en ce qu'**un authentifiant unitaire du sujet matériel est une image de sa région d'authentification.

3. Procédé selon l'une des revendications précédentes, **caractérisé en ce qu'**il comprend une étape d'enregistrement d'au moins un identifiant du destinataire associé à au moins un authentifiant unitaire du sujet matériel.

4. Procédé selon l'une des revendications1 ou 3, **caractérisé en ce qu'**il comprend la détermination, dans chaque image de région d'authentification du sujet matériel, de points singuliers et de descripteurs d'une région singulière associée à chaque point singulier, les descripteurs étant associés à chaque point singulier correspondant, et détermination à partir de ladite image d'un authentifiant unitaire dudit sujet matériel.

5. Procédé selon l'une des revendications précédentes, **caractérisé en ce que** l'information relative au sujet matériel comprend au moins une information choisie parmi :
- une information de géolocalisation du sujet matériel
- une indication sur la région d'authentification du sujet matériel.

6. Procédé selon l'une des revendications précédentes, **caractérisé en ce que** dans la phase de récupération, le message est visualisé par le destinataire en association avec une image du sujet matériel et/ou de son environnement.

7. Procédé selon l'une des revendications précédentes, **caractérisé en ce que** la détermination d'un authentifiant unitaire du sujet matériel est effectuée au moyen d'un algorithme donné et **en ce qu'**il est mis en oeuvre un dispositif de communication mobile qui comprend des moyens d'acquisition d'image et des moyens de calcul et qui est adapté pour mettre en oeuvre le même algorithme donné pour la détermination du deuxième authentifiant unitaire.

8. Procédé selon l'une des revendications précédentes, **caractérisé en ce qu'**il est mis en oeuvre un dispositif de communication mobile qui comprend des moyens d'acquisition d'image et des moyens de calcul et qui est adapté pour transmettre au système serveur la deuxième image, de manière sécurisée ou non, sans réaliser localement les calculs de comparaison.

9. Procédé selon l'une des revendications 1 à 7, **caractérisé en ce que** les phases de détermination des authentifiants unitaires et de comparaison sont effectuées pour partie dans un dispositif de communication mobile qui comprend des moyens d'acquisition d'image et des moyens de calcul et pour partie dans le système serveur.

10. Procédé selon l'une des revendications précédentes, **caractérisé en ce que** le sujet matériel appartient aux familles de sujets comprenant au moins une région d'authentification comprenant une structure intrinsèque essentiellement aléatoire non aisément reproductible dont la reproduction est difficile voire impossible **en ce qu'**elle résulte notamment d'un processus non prédictible à l'échelle d'observation.

11. Procédé selon l'une des revendications précédentes, **caractérisé en ce que** pour la détermination des authentifiants unitaires, une étape de recalage est opérée sur les première et deuxième images soit l'une par rapport à l'autre, soit par rapport à une même référence de recalage.

12. Procédé selon la revendication précédente, **caractérisé en ce que** le recalage mis en oeuvre est un recalage dense s'appuyant sur un grand nombre de points ou de zones de correspondance, et permettant la reconnaissance et l'authentification du sujet matériel.

13. Procédé selon l'une des revendications précédentes, **caractérisé en ce qu'**il est mis en oeuvre un système de registre distribué et sécurisé, de type « blockchain », dans lequel est enregistré au moins l'un des éléments suivants :
- le message transmis,
- le sujet matériel mis en oeuvre,
- une image du sujet matériel mis en oeuvre.

14. Procédé selon l'une des revendications précédentes, **caractérisé en ce que** le message évolue jusqu'à sa délivrance à son destinataire.

15. Procédé selon l'une des revendications précédentes, **caractérisé en ce qu'**il est mis en oeuvre un réseau de neurones artificiels pour les étapes de détermination et/ou de comparaison des authentifiants unitaires.

## Patentansprüche

1. Verfahren zur Übermittlung einer elektronischen Nachricht durch einen Absender an einen Empfänger mit den folgenden Schritten:
- zunächst Auswahl eines vom Absender und vom Empfänger unabhängigen materiellen Gegenstands durch den Absender, mit einer Authentifizierungszone, die eine Mikrostruktur mit einer gegebenen Beobachtungsvergrößerung aufweist, dann Erfassen oder Schaffen eines ersten Bilds der Authentifizierungszone durch den Absender,
- Speichern der zu übermittelnden elektronischen Nachricht durch den Absender auf einem Serversystem,
- vom ersten Bild ausgehend, Bestimmen einer ersten Einheitskennung des materiellen Gegenstands und Speichern der ersten Einheitskennung auf dem Serversystem, wobei die erste Einheitskennung der zu übermittelnden Nachricht zugeordnet ist,
- Speichern einer Kennung des Empfängers der Nachricht auf dem Serversystem, wobei die Kennung der zu übermittelnden Nachricht zugeordnet ist,
- Mitteilung an den Empfänger, daß die Nachricht existiert,
- Übermittlung einer Information an den Empfänger bezüglich des materiellen Gegenstands, von dem das Bild der Authentifizierungszone vom Empfänger zum Abrufen der Nachricht verwendet werden soll,
- Erfassen eines zweiten Bilds der Authentifizierungszone des materiellen Gegenstands durch den Empfänger, wobei das zweite Bild mit einer Qualität erfaßt wird, die im Wesentlichen der des ersten Bilds gleicht, so daß das erste Bild und das zweite Bild ein im Wesentlichen gleiches Niveau an Informationen bezüglich der Authentifizierungszone aufweisen,
- vom zweiten Bild ausgehend, Bestimmen einer zweiten Einheitskennung des materiellen Gegenstands,
- Übermittlung einer Kennung des Empfängers, der das zweite Bild, das der zweiten Einheitskennung zugrunde liegt, erfaßt hat, an das Serversystem, wobei die Kennung des Empfängers der zweiten Einheitskennung zugeordnet ist,
- Vergleich der Einheitskennungen,
- im Fall einer Ähnlichkeit zwischen der ersten und der zweiten Einheitskennung und der Übereinstimmung der im Serversystem gespeicherten Kennung des Empfängers mit der übermittelten Kennung des Empfängers, Übermittlung der Nachricht an den Empfänger, wobei die Nachricht der im Serversystem gespeicherten Kennung des Empfängers und der ersten Einheitskennung zugeordnet ist.

2. Verfahren gemäß Anspruch 1, **dadurch gekennzeichnet, daß** eine Einheitskennung des materiellen Gegenstands ein Bild von dessen Authentifizierungszone ist.

3. Verfahren gemäß einem der vorangehenden Ansprüche, **dadurch gekennzeichnet, daß** es einen Schritt des Speicherns wenigstens einer Kennung des Empfängers aufweist, die mindestens einer Einheitskennung des materiellen Gegenstands zugeordnet ist.

4. Verfahren gemäß einem der Ansprüche 1 oder 3, **dadurch gekennzeichnet, daß** in jedem Bild der Authentifizierungszone des materiellen Gegenstands einzelne Punkte und Beschreibungen einer jedem einzelnen Punkt zugeordneten einzelnen Zone bestimmt werden, wobei die Beschreibungen jedem entsprechenden einzelnen Punkt zugeordnet sind, und daß von diesem Bild ausgehend eine Einheitskennung des materiellen Gegenstands bestimmt wird.

5. Verfahren gemäß einem der vorangehenden Ansprüche, **dadurch gekennzeichnet, daß** die Information bezüglich des materiellen Gegenstands mindestens eine aus
- einer Information zur Geolokalisation des materiellen Gegenstands,
- einer Information zur Authentifizierungszone des materiellen Gegenstands ausgewählte Information aufweist.

6. Verfahren gemäß einem der vorangehenden Ansprüche, **dadurch gekennzeichnet, daß** die Nachricht in der Phase des Abrufens zusammen mit einem Bild des materiellen Gegenstands und/oder dessen Umfeld durch den Empfänger sichtbar gemacht wird.

7. Verfahren gemäß einem der vorangehenden Ansprüche, **dadurch gekennzeichnet, daß** das Bestimmen einer Einheitskennung des materiellen Gegenstands mittels eines gegebenen Algorithmus erfolgt und daß eine mobile Kommunikationsvorrichtung eingesetzt wird, die Bilderfassungsmittel und Rechenmittel aufweist und die dazu ausgelegt ist, denselben gegebenen Algorithmus zum Bestimmen der zweiten Einheitskennung anzuwenden.

8. Verfahren gemäß einem der vorangehenden Ansprüche, **dadurch gekennzeichnet, daß** eine mobile Kommunikationsvorrichtung eingesetzt wird, die Bilderfassungsmittel und Rechenmittel aufweist und die dazu ausgelegt ist, dem Serversystem das zweite Bild gesichert oder ungesichert zu übermitteln, ohne vor Ort die Berechnungen für Neueinstellung oder Vergleich durchzuführen.

9. Verfahren gemäß einem der Ansprüche 1 bis 7, **dadurch gekennzeichnet, daß** die Phasen der Neueinstellung, des Bestimmens der Einheitskennungen und des Vergleichens zum Teil in einer mobilen Kommunikationsvorrichtung, die Bilderfassungsmittel und Rechenmittel aufweist, und zum Teil im Serversystem durchgeführt werden.

10. Verfahren gemäß einem der vorangehenden Ansprüche, **dadurch gekennzeichnet, daß** der materielle Gegenstand zu den Gruppen von Gegenständen gehört, die mindestens eine Authentifizierungszone mit einer im Wesentlichen zufälligen, nicht einfach reproduzierbaren inhärenten Struktur aufweisen, deren Reproduktion insofern schwierig oder gar unmöglich ist, als sie insbesondere aus einem auf der Beobachtungsebene nicht voraussagbaren Verfahren hervorgeht.

11. Verfahren gemäß einem der vorangehenden Ansprüche, **dadurch gekennzeichnet, daß** auf dem ersten und dem zweiten Bild zum Bestimmen der Einheitskennungen ein Schritt der Neueinstellung zueinander oder in Bezug auf eine selbe Neueinstellungsreferenz durchgeführt wird.

12. Verfahren gemäß dem vorangehenden Anspruch, **dadurch gekennzeichnet, daß** die durchgeführte Neueinstellung eine dichte Neueinstellung auf der Grundlage einer großen Anzahl Punkte oder Bezugszonen ist und das Erkennen und die Authentifizierung des materiellen Gegenstands ermöglicht.

13. Verfahren gemäß einem der vorangehenden Ansprüche, **dadurch gekennzeichnet, daß** ein verteiltes und gesichertes Registrierungssystem vom Typ "Blockchain" eingesetzt wird, wobei mindestens eins der folgenden Elemente gespeichert wird:
- die übermittelte Nachricht,
- der verwendete materielle Gegenstand,
- ein Bild des verwendeten materiellen Gegenstands.

14. Verfahren gemäß einem der vorangehenden Ansprüche, **dadurch gekennzeichnet, daß** sich die Nachricht bis zur Auslieferung an den Empfänger weiterentwickelt.

15. Verfahren gemäß einem der vorangehenden Ansprüche, **dadurch gekennzeichnet, daß** ein Netz von künstlichen Neuronen für die Schritte des Bestimmens und/oder des Vergleichs der Einheitskennungen eingesetzt wird.

## Claims

1. Method of transmission of an electronic message by a sender to a recipient comprising the following steps:
- initially, choice by the sender of at least one material subject having at least one authentication area showing a microstructure at a given observation magnification, then acquisition or implementation of at least one first image of the authentication area,
- recording, by the sender, of the electronic message to be transmitted on a server system,
- determination from the first image of a first unitary authenticator of the material subject and registration on the server system of the first unitary authenticator, the first unitary authenticator being associated with the message to be transmitted,
- recording on the server system of an identifier of the recipient of the message, the identifier being associated with the message to be transmitted,
- notification to the recipient of the existence of a message,
- transmission to the recipient of information relating to the material subject whose image of the authentication region is to be used by the recipient for the retrieval of the message,
- acquisition by the recipient of at least one second image of the authentication area of the material subject, the second image being acquired with a quality substantially equivalent to that of the first image so that the first and the second images contain a substantially equivalent level of information relating to the authentication area,
- determination from the second image of a second unitary authenticator of the material subject,
- transmission to the server system of an identifier of the recipient who acquired the second image from which the second unitary authenticator originated, the identifier of the said recipient being associated with the second unitary authenticator,
- comparison of the unitary authenticators,
- in case of similarity between the first and second unitary authenticators and matching between the recipient identifier recorded in the server system and the transmitted recipient identifier, transmission to the recipient of the message associated with its identifier and with the unitary authenticator.

2. Method according to claim 1, **characterized in that** a unitary authenticator of the material subject is an image of its authentication region.

3. Method according to one of the preceding claims, **characterized in that** it comprises a step of recording at least one identifier of the recipient associated with at least one unitary authenticator of the material subject.

4. Method according to one of claims 1 or 3, **characterized in that** it comprises the determination, in each image of authentication region of the material subject, singular points and descriptors of a singular region associated with each singular point, the descriptors being associated with each corresponding singular point, and determination from said image of a unitary authenticator of said material subject.

5. Method according to one of the preceding claims, **characterized in that** the information relating to the material subject comprises at least one piece of information selected from:
- geolocation information of the material subject
- an indication of the authentication region of the hardware subject.

6. Method according to one of the preceding claims, **characterized in that** in the recovery phase, the message is viewed by the recipient in association with an image of the material subject and / or his environment.

7. Method according to one of the preceding claims, **characterized in that** the determination of a unitary authenticator of the material subject is carried out by means of a given algorithm and **in that** it is implemented a mobile communication device which comprises image acquisition means and computing means and which is adapted to implement the same given algorithm for the determination of the second unit authenticator.

8. Method according to one of the preceding claims, **characterized in that** it is implemented a mobile communication device which comprises image acquisition means and computing means and which is adapted to transmit to the server system the second image, securely or not, without locally performing comparison calculations.

9. Method according to one of claims 1 to 7, **characterized in that** the phases of determining unitary authenticators and comparison are carried out partly in a mobile communication device which comprises image acquisition means and computing means and partly in the server system.

10. Method according to one of the preceding claims, **characterized in that** the material subject belongs to the families of subjects comprising at least one authentication region comprising an essentially random intrinsic structure not easily reproducible whose reproduction is difficult or impossible **in that** it results, notably, from a process not predictable at the observation scale.

11. Method according to one of the preceding claims, **characterized in that** for the determination of unitary authenticators, a registration step is performed on the first and second images either with respect to each other or with respect to the same registration reference.

12. Method according to the preceding claim, **characterized in that** the registration implemented is a dense registration based on a large number of points or areas of correspondence, and allowing the recognition and authentication of the material subject.

13. Method according to one of the preceding claims, **characterized in that** it is implemented a distributed and secure ledger system, of the "blockchain" type, wherein is recorded at least one of the following:
- the message transmitted,
- the material subject implemented,
- an image of the material subject implemented.

14. Method according to one of the preceding claims, **characterized in that** the message evolves until its delivery to its recipient.

15. Method according to one of the preceding claims, **characterized in that** it is implemented an artificial neural network for the steps of determination and / or comparison of unitary authenticators.
